# EUROPÄISCHE PATENTSCHRIFT

(11) **EP 2 416 132 B1**
(45) Veröffentlichungstag und Bekanntmachung des Hinweises auf die Patenterteilung: **27.03.2013**
(21) Anmeldenummer: 10172015.9
(22) Anmeldetag: 05.08.2010
(51) Int. Cl.: G01G 21/28

(54) **Waage mit Anzeige- und Bedieneinheit**
Weighing scales with display and control unit
Balance dotée d'une unité d'affichage et de commande

(43) Veröffentlichungstag der Anmeldung: 08.02.2012
(73) Patentinhaber: Mettler-Toledo (Albstadt) GmbH, 72458 Albstadt (DE)
(72) Erfinder: Schoen, Thomas, 72336, Balingen (DE)
(74) Vertreter: Mettler-Toledo

(56) Entgegenhaltungen:
- DE-A1-102006 033 651
- DE-B3-102005 060 105
- DE-U1-202007 010 007
- DE-U1-202008 008 457
- US-A- 4 022 326
- US-A- 5 533 631
- US-A- 5 738 226

## Beschreibung

Die vorliegende Erfindung betrifft eine Waage mit einer Anzeige- und Bedieneinheit, die vorwiegend im Lebensmittelbereich zur Anwendung kommt.

Diese Waagen weisen üblicherweise eine Anzeige- und Bedieneinheit, eine Waagenplattform und eine Waagenelektronik zur Steuerung der Waage auf. Die Anzeige- und Bedieneinheit ist mittels eines Stativs mit der Waagenplattform verbunden. Die Waagenelektronik ist mehrheitlich in der Anzeige- und Bedieneinheit angeordnet.

Waagen im Lebensmittelbereich müssen regelmässig gereinigt werden. Dazu kommen oft Hochdruckreinigungsgeräte und scharfe Reinigungsmittel zum Einsatz. Um sicher zu stellen, dass sich keine Lebensmittelreste auf der Waage ablagern, wird das jeweilige Gehäuse der Anzeige- und Bedieneinheit, der Waagenplattform und des Stativs aus Edelstahl gefertigt. Die Gehäuse müssen hinreichend gut abgedichtet sein um sicherzustellen, dass kein Wasser oder Reinigungsmittel in das Innere des Gehäuses eindringen kann. Falls Wasser oder Reinigungsmittel in eines der Gehäuse eindringen würde, könnte die sich darin befindende Waagenelektronik beschädigt werden. Solche Gehäuse sind aus dem Stand der Technik bekannt.

Die Waagenelektronik der Anzeige- und Bedieneinheit und die Waagenelektronik der Waagenplattform müssen miteinander kommunizieren. Dies erfolgt mittels Verbindungskabeln. Diese Kabel können, wie beispielsweise in DE 202008008457 U1 offenbart, aussen am Stativ entlanggeführt werden. Dies hat den Nachteil, dass die am Stativ entlanggeführten Kabel vor allem beim Reinigungsprozess abrasiven Einflüssen ausgesetzt ist. Aus dem Stand der Technik sind Stative mit einem Stativhohlraum bekannt, wobei die Verbindungskabel im Innern des Stativhohlraums geführt werden. Auf diese Weise sind die Verbindungskabel während des abrasiven Reinigungsprozesses durch das umgebende Stativ geschützt.

Aus DE102006033651 A1 ist eine Waage mit einer Säule mit einem Hohlkörper bekannt. In diese Säule ist die Anzeigen- und Bedieneinheit integriert und die Waagenelektronik ist im Innern des Hohlraums angeordnet und dadurch vor abrasiven Einflüssen geschützt. Die Säule weist grosse Abmessungen auf. Die Waagenelektronik muss in regelmässigen Abständen gewartet werden. Um Zugang zu der Waagenelektronik zu bekommen, muss das Gehäuse der Waagenplattform und/oder der Anzeige- und Bedieneinheit geöffnet werden.

Das Öffnen der Gehäuse ist aufwändig da jeweils mehrere Befestigungsmittel gelöst werden müssen. Ein weiteres Problem besteht darin, dass beim Öffnen des Gehäuses ein Gehäuseteil entfernt werden muss. Zwischen diesem Gehäuseteil und dem restlichem Gehäuse ist eine Gehäusedichtung angeordnet. Diese Gehäusedichtung ist empfindlich und nimmt oft beim Öffnen Schaden. Die Beschädigung der Gehäusedichtung wird bei der Wartung oft nicht bemerkt. In Folge dessen kann bei einer späteren Reinigung der Waage Reinigungsmittel oder Wasser in das Innere der Waagenplattform und/oder der Anzeige- und Bedieneinheit eindringen, wodurch die Waagenelektronik beschädigt werden kann.

Eine Lösung zu diesem Problem ist beispielsweise aus DE 10 2005 060 105 B3 bekannt. Die offenbarte Waage weist ein aus einem Blechzuschnitt hergestelltes massives Stativ auf. Ein Teil der Waagenelektronik wird mit Hilfe von Befestigungselementen am massiven Stativ befestigt. Nachteilig ist, dass die zuführenden Kabel abrasiven Einflüssen während des Reinigungsprozesses ausgesetzt sind.

Es stellt sich somit die Aufgabe eine alternative Waage zu schaffen, bei der zumindest Teile der Waagenelektronik gewartet werden können ohne das Gehäuse der Waagenplattform oder der Anzeigen- und Bedieneinheit zu öffnen.

Diese Aufgabe wird durch eine Waage gelöst, die die im unabhängigen Patentanspruch angegebenen Merkmale aufweist. Weitere vorteilhafte Ausführungsformen können den abhängigen Ansprüchen entnommen werden.

Die erfindungsgemässe Waage weist eine Anzeige- und Bedieneinheit, eine Waagenplattform, eine Waagenelektronik zur Steuerung der Waage und ein Stativ auf, das die Anzeige- und Bedieneinheit mit der Waagenplattform verbindet. Das Stativ weist einen Stativhohlraum auf. Ausserdem weist das Stativ eine Stativöffnung auf. Im oder am Stativhohlraum ist ein Trägerelement angeordnet und auf dem Trägerelement sind zumindest Teile der Waagenelektronik angeordnet und die auf dem Trägerelement angeordneten Teile der Waagenelektronik sind zu Wartungszwecken zumindest teilweise aus der Stativöffnung entfernbar.

Diese Anordnung bietet den Vorteil, dass zu Wartungszwecken das Trägerelement mit der darauf angeordneten Waagenelektronik zugänglich ist ohne dass das Gehäuse der Waagenplattform oder der Anzeigen- und Bedieneinheit geöffnet werden muss.

Die Waagenelektronik ist derart ausgestaltet, dass beim zumindest teilweisen Herausziehen des Trägerelements die auf dem Trägerelement angeordneten Teile der Waagenelektronik mit den restlichten Teilen der Waagenelektronik verbunden bleiben. Eine notwendige Voraussetzung dazu ist, dass die Verbindungskabel zwischen den auf dem Trägerelement angeordneten Teilen der Waagenelektronik und den restlichen Teilen der Waagenelektronik lang genug sind.

In einer bevorzugten Ausführungsform ist das Stativ länglich ausgebildet und weist ein erstes und ein zweites Ende auf. Am ersten Ende ist die Anzeigen- und Bedieneinheit angeordnet und am zweiten Ende die Waagenplattform angeordnet ist. Die elektrischen Leitungen werden bevorzugterweise vor Umwelteinflüssen geschützt. Dazu muss das Gehäuse des Stativs mit dem Gehäuse der Anzeigen- und Bedieneinheit derart miteinander verbunden sein, dass die elektrischen Leitungen komplett vom Gehäuse des Stativs und dem Gehäuse der Anzeigen- und Bedieneinheit umgeben werden.

Idealerweise ist das Stativ in Betriebsposition der Waage mehrheitlich vertikal ausgerichtet, d.h. in Schwerkraftrichtung. Das Stativ weist oben das erste Ende und unten das zweite Ende auf. Die Stativöffnung befindet sich am zweiten, unteren Ende des Stativs. Die Stativöffnung ist vorteilhafterweise horizontal, d.h. senkrecht zur Schwerkraftrichtung ausgerichtet. Dadurch ist die Stativöffnung nur von unten zugänglich. Das bietet den Vorteil, dass das Eindringen von Spritzwasser durch die Stativöffnung verringert ist.

Zum zusätzlichen Schutz ist die Stativöffnung verschliessbar. Dazu eignet sich beispielsweise eine Verschlussplatte, die die Stativöffnung gegen Umwelteinflüssen verschliesst. Die Verschlussplatte kann mit reversibel lösbaren Befestigungsmitteln, wie z.B. Schrauben befestigt werden. Es ist jedoch auch der Einsatz von werkzeuglos entfernbaren Befestigungsmittel, wie beispielsweise Klemmen, möglich. Zusätzlich kann zwischen der Verschlussplatte und der Stativöffnung eine Dichtung angeordnet werden, wodurch zusätzlich das Eindringen von Verschmutzungen vermindert wird.

Es ist auch denkbar die Stativöffnung vertikal an einer Seitenwand des Stativs vorzusehen. Diese Ausführungsform ist stärker Spritzwassereinwirkung ausgesetzt. Es ist deshalb wichtig die vertikal ausgerichtete Stativöffnung gut dichtend zu verschliessen um das Eindringen von Verschmutzungen zu verhindern.

Auf der Verschlussplatte können auch Teile der Waagenelektronik angeordnet werden. D.h. die Verschlussplatte wird als Trägerelement verwendet. Der Vorteil dieser Ausführung besteht darin, dass kein zusätzliches Trägerelement benötigt wird.

Nicht alle Teile der Waagenelektronik reagieren gleich empfindlich auf das Eindringen von Verschmutzungen. Es ist vorteilhaft verschmutzungssensible Teile der Waagenelektronik in der Waagenplattform und/oder der Anzeigen- und Bedieneinheit anzuordnen. Teile der Waagenelektronik, die weniger sensibel auf Verschmutzung reagieren, sind auf dem Trägerelement angeordnet. Vorteilhaft bei dieser Anordnung ist, dass bei der Wartung eines weniger verschmutzungssensiblen Teils der Waagenelektronik nur das Stativ, jedoch nicht die Waagenplattform und/oder die Anzeige- und Bedieneinheit geöffnet werden muss. Dadurch werden die verschmutzungssensiblen Teile nicht der Gefahr einer Verschmutzung ausgesetzt werden. Ein zusätzlicher Vorteil besteht darin, dass die Dichtung der Waagenplattform und/oder Anzeigen- und Bedieneinheit nicht der Gefahr ausgesetzt wird beschädigt zu werden.

Falls die Aussenabmessungen des Trägerelements näherungsweise den Innenabmessungen des Stativhohlraums entsprechen, kann das Trägerelement ohne zusätzliche Führungselemente in den Stativhohlraum eingebracht werden. Um sicher zu stellen, dass das Trägerelement im Stativhohlraum verschoben werden kann, muss die Abmessung des Trägerelements etwas kleiner sein als die Abmessung des Stativhohlraums. Die Abmessungen des Trägerelements sollten jedoch nicht wesentlich kleiner sein als die Abmessungen des Stativhohlraums, da ansonsten das Trägerelement im Stativhohlraum unkontrolliert verschoben werden kann. Das ist vor allem beim Transport der Waage unerwünscht, da sich beim unkontrollierten Bewegen des Trägerelements elektronische Bauteile vom Trägerelement lösen können.

Vorteilhafterweise ist das Trägerelement mehrheitlich flach ausgebildet und das Trägerelement ist verschiebbar im Stativhohlraum gelagert. Das hat den Vorteil, dass das Trägerelement ohne Verwendung von Werkzeugen aus der Stativöffnung entfernt und eingebracht werden kann.

Auf zwei gegenüberliegenden Seiten des Trägerelements können Positionierungselemente angeordnet sein, die der Positionierung des Trägerelements im Stativhohlraum dienen. Das Positionierungselement kann die Form eines Steges aufweisen, der senkrecht zu einer Fläche des Trägerelements angeordnet ist.

Das Trägerelement kann beispielsweise mittels Führungsschienen verschiebbar im Stativhohlraum gelagert werden. Die Führungsschienen können sowohl auf dem Trägerelement als auch im Stativhohlraum angeordnet sein. Es sind jedoch auch andere Ausführungsformen denkbar.

Viele Waagen benötigen eine externe Stromzufuhr und/oder mindestens eine Messleitung zum Austausch von Daten mit der in der Wägeplattform angeordneten Wägezelle und/oder mit waagenexternen Geräten oder Bauteilen. Der Austausch der Stromzuführung muss in der Praxis dann durchgeführt werden, wenn die Waage in einem anderen Land mit anderen länderspezifischen Steckern verwendet wird. Der Austausch der Messleitungen und/oder der Leitungen für die Stromzufuhr ist beispielsweise erforderlich, falls die Messleitung mit externen elektronische Geräte oder Bauteile mit der Waagenelektronik hergestellt oder gelöst werden müssen.

Idealerweise sind die elektrischen Leitungen für die Stromzufuhr und/oder die Messleitungen ausschliesslich mit auf dem Trägerelement angeordneten Teilen verbunden. Diese Anordnung bietet den Vorteil, dass bei einem Austausch der Leitungen der Stromzufuhr oder der Messleitungen nur Veränderungen an Bauteilen auf dem Trägerelement vorgenommen werden muss. Die Waagenplattform und/oder die Anzeige- und Bedieneinheit müssen nicht geöffnet werden.

Idealerweise werden die elektrischen Leitungen zur Stromzufuhr und/oder Messleitungen mit Hilfe von Buchsen mit weiteren elektronischen Bauteilen der Waage verbunden werden. Es ist auch der Einsatz von Stecker oder Klemmen möglich.

In einer möglichen Ausführungsform weist das Stativ Öffnungen zum Durchführen von elektrischen Leitungen zur Stromversorgung der Waage und/oder Messleitungen auf. Dabei sind diese Öffnungen beim zweiten Ende angeordnet. Diese Anordnung bietet den Vorteil, dass die Leitungen räumlich nahe beim Trägerelement angeordnet sind, was den Austausch der Leitungen vereinfacht.

Mindestens ein Positionierungselement kann in der Form eines Stegs ausgebildet sein, der eine Fläche des Trägerelements in einen ersten und einen zweiten Bereich teilt. In einer bevorzugten Ausführungsform wird in dem ersten Bereich der Anschluss der elektrischen Leitungen der Stromzufuhr und im zweiten Bereich die Messleitung angebracht. Diese Anordnung bietet den Vorteil, dass die elektrischen Leitungen räumlich von den Messleitungen getrennt sind und störende Einflüsse der Leitungen auf einander vermindert werden.

Ein Beispiel einer erfindungsgemässen Waage ist in den folgenden Figuren dargestellt. Es zeigen:
- Figur 1: eine perspektivische Ansicht der Vorderseite der erfindungsgemässen Waage,
- Figur 2a: eine perspektivische Ansicht der Hinterseite der erfindungsgemässen Waage in Wartungsposition,
- Figur 2b: eine Vergrösserung des Innenlebens des Stativhohlraums in Wartungsposition,
- Figur 3a: eine perspektivische Ansicht der Hinterseite der erfindungsgemässen Waage in Betriebsposition und
- Figur 3b: Vergrösserung des Innenlebens des Stativhohlraums in Betriebsposition.

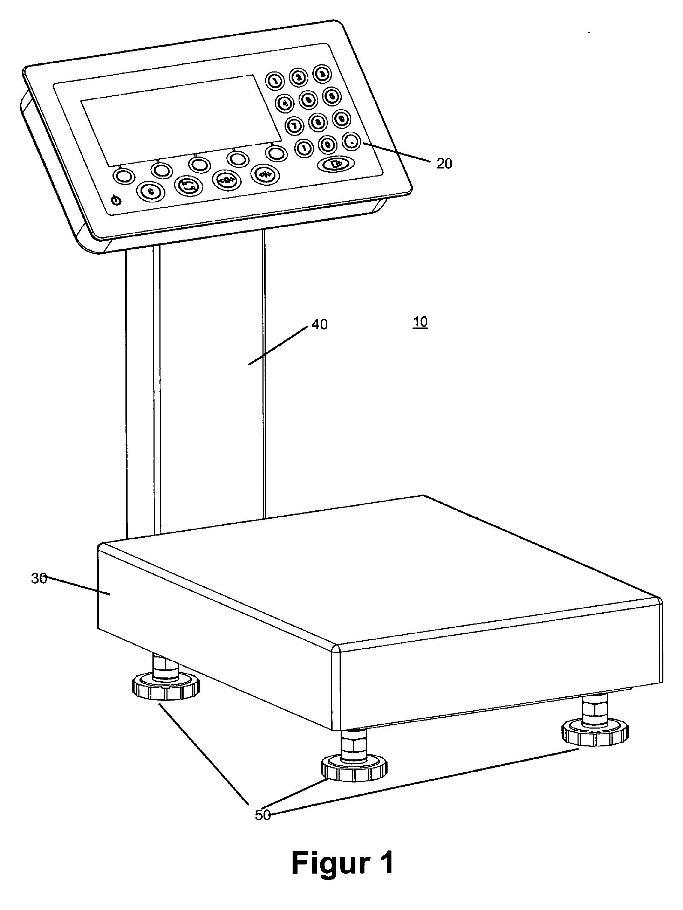

Figur 1 zeigt eine perspektivische Ansicht der Vorderseite der erfindungsgemäßen Waage 10. Die erfindungsgemäße Waage 10 weist eine Anzeige- und Bedieneinheit 20, eine Waagenplattform 30 und ein Stativ 40 auf. Die Waagenplattform 20 weist eine mehrheitlich horizontal, senkrecht zur Schwerkraftrichtung ausgerichtete Plattform auf, die der Aufnahme des zu wiegendes Guts dient. Die Waagenplattform 30 ist auf vier Füssen 50 gelagert. Idealerweise sind die Füße 50 höhenverstellbar um eine horizontale Ausrichtung der Waage zu gewährleisten. Die Anzeige- und Bedieneinheit 20 dient der Anzeige des Wägeresultats und der Bedienung der Waage 10. Das Stativ 40 dient der Positionierung der Anzeige- und Bedieneinheit 20 in einer benutzerfreundlichen Position.

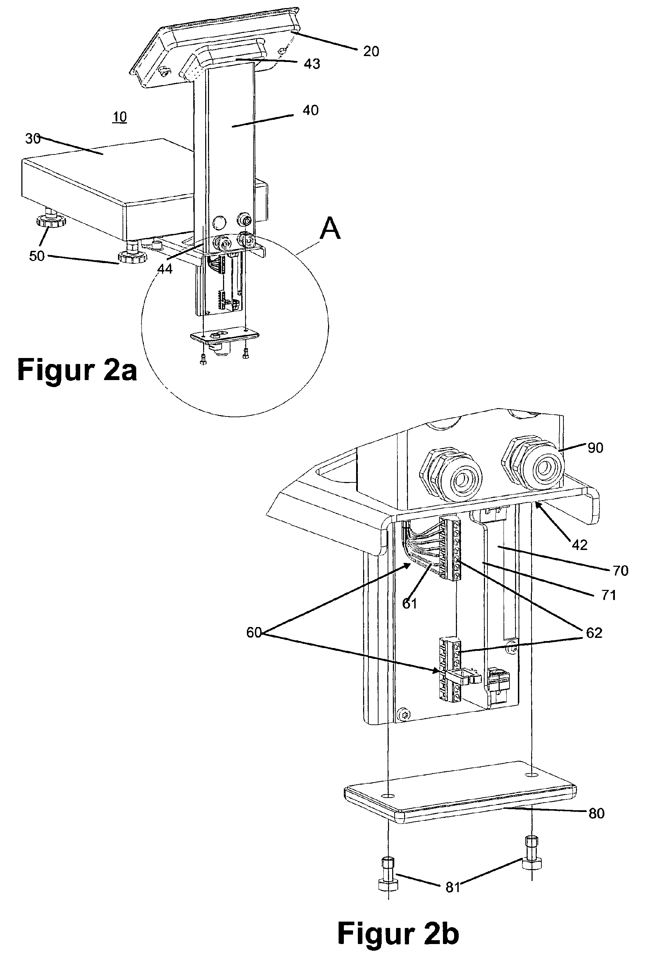

Figur 2a zeigt eine perspektivische Ansicht der Hinterseite der erfindungsgemäßen Waage mit geöffnetem Stativ 40 in Wartungsposition. Das Stativ 40 ist vertikal ausgerichtet und hat ein erstes Ende 43 und ein zweites Ende 44. In Betriebsposition befindet sich das erste Ende 43 oben und das zweite Ende 44 unten. Am ersten Ende 43 ist die Anzeige- und Bedieneinheit 20 angeordnet. Am zweiten Ende 44 ist die Waagenplattform 30 angeordnet. Das Stativ 20 ist innen hohl und weist einen Stativhohlraum 41 auf. Im Stativhohlraum 41 sind Teile der Waagenelektronik angeordnet.

Figur 2b zeigt eine Vergrößerung des Ausschnitts A der Figur 2a. Figur 2b dient der besseren Veranschaulichung des Innenlebens des Stativs 40 in Wartungsposition. Das Stativ 40 ist nach unten offen. Diese Öffnung wird als Stativöffnung 42 bezeichnet. Die Stativöffnung 42 kann mit einer Verschlussplatte 80 verschlossen werden. Mit Hilfe von Befestigungsmitteln 81 kann die Verschlussplatte 80 am Stativ 40 befestigt werden. Als Befestigungsmittel 81 sind Schrauben denkbar. Es können jedoch auch andere Befestigungsmittel verwendet werden, beispielsweise kann die Verschlussplatte 80 auch einrastbar ausgebildet sein. Eine Seitenwand des Stativs 40 weist zwei Öffnungen zum Durchführen der elektrischen Leitungen zur Stromzufuhr 64 auf. Die beiden Öffnungen sind in der Darstellung nicht sichtbar, da sie durch die Kabeldurchführung 90 verdeckt werden. Die Kabeldurchführung 90 dient, wie in Figur 2a dargestellt, der Durchführung der Kabel. Im Innern der Kabeldurchführung 90 ist eine Dichtung angeordnet, die das Eindringen von Verunreinigungen in den Stativhohlraum 41 verhindert.

Das Trägerelement 70 wurde teilweise aus der Stativöffnung 42 herausgezogen. Auf dem Trägerelement 70 sind Verbindungselemente 62 angeordnet. Die Verbindungselemente 62 können elektrische Leitungen im Waageninnern 61 und die elektrischen Leitungen zur Stromzufuhr aufnehmen. Als Verbindungselemente 62 können beispielsweise Buchsen oder Klemmen verwendet werden. Zum Auswechseln der Stromanschlüsse muss durch Lösen des Befestigungsmittels 81 die Verschlussplatte 80 entfernt werden. Anschließend kann werkzeugfrei das Trägerelement 70 zumindest teilweise aus dem Stativhohlraum 41 herausgezogen werden. Durch geeignetes Platzieren der elektrischen Leitungen in die Verbindungselementen 62 können die Leitungen zur Stromzufuhr ausgewechselt werden. Beim Auswechseln von Messleitungen kann analog verfahren werden.

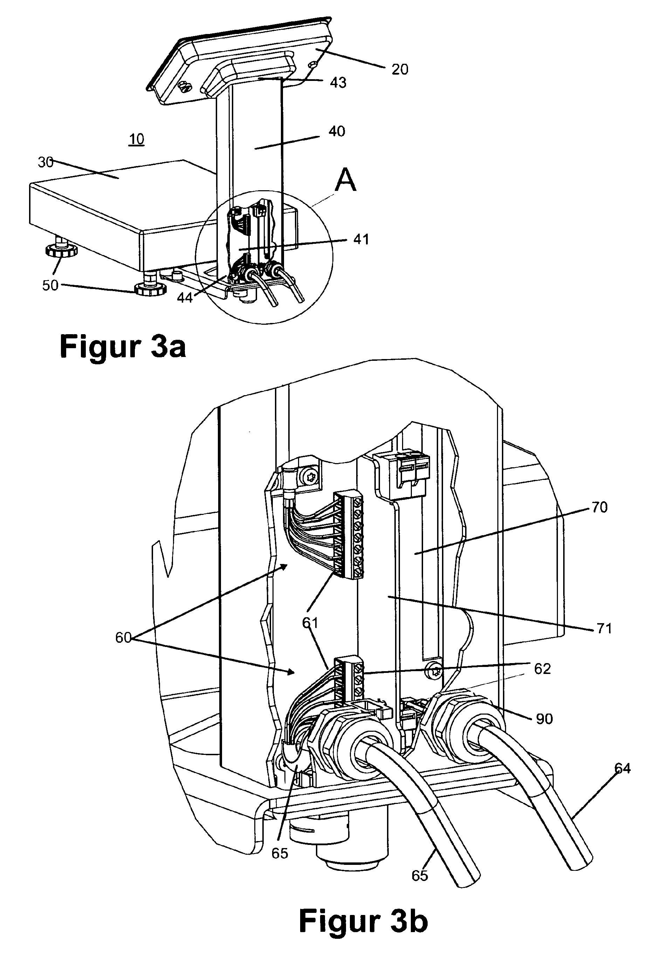

Figur 3a zeigt eine perspektivische Ansicht der Hinterseite der erfindungsgemäßen Waage in Betriebsposition. Zur Veranschaulichung des Innenlebens des Stativhohlraums 41 wurde das Stativgehäuse gebrochen gezeichnet.

Figur 3b zeigt den Ausschnitt A aus Figur 3a. Es ist das Innenleben des Stativhohlraums 41 in Betriebsposition dargestellt. Durch eine seitliche Öffnung werden die elektrischen Leitungen zur Stromzufuhr 64 in den Stativhohlraum 41 geführt. Die elektrischen Leitungen 64 sind mit Hilfe von Verbindungselementen 62 mit der Waagenelektronik 60 verbunden. Durch eine weitere seitliche Öffnung werden die Messleitungen 65 in den Stativhohlraum 41 geführt. Die Messleitungen 65 sind ebenfalls mit Hilfe von Verbindungselementen 62 mit der Waagenelektronik 60 verbunden.

Die Verbindungselemente 62 sind auf dem Trägerelement 70 angeordnet. Die Trägerelement 70 ist im Wesentlichen flach ausgebildet. Senkrecht zur flachen Ausdehnung des Trägerelements 70 sind Positionierungselemente 71 angeordnet. Die räumliche Ausdehnung des Trägerelements 70 mit Positionierungselementen 71 entspricht näherungsweise der räumlichen Ausdehnung des Stativhohlraums 41. Auf diese Weise kann das Trägerelement 70 passgenau in den Stativhohlraum 41 eingebracht werden. Damit das Trägerelement 70 einfach aus dem Stativhohlraum 41 gezogen werden kann, muss die räumliche Ausdehnung des Trägerelements 70 etwas kleiner sein als die räumliche Ausdehnung des Stativhohlraums 41.

Mindestens ein Positionierungselement kann in der Form eines Stegs ausgebildet sein, der eine Fläche des Trägerelements 70 in zwei Bereiche teilt. In einer bevorzugten Ausführungsform wird in einem der Bereich der Anschluss der elektrischen Leitungen 64 und im anderen Bereich die Messleitung 65 angebracht. Diese Anordnung bietet den Vorteil, dass die elektrischen Leitungen 64 räumlich von den Messleitungen 65 getrennt sind und störende Einflüsse der Leitungen 64, 65 auf einander vermindert werden. Das Trägerelement 70 und der Steg sind vorteilhafterweise aus Metall gefertigt. Es ist jedoch auch die Verwendung von anderen Materialien, insbesondere Kunststoff geeignet.

Obwohl die Erfindung durch die Darstellung eines spezifischen Ausführungsbeispiels beschrieben worden ist, ist es offensichtlich, dass zahlreiche weitere Ausführungsvarianten in Kenntnis der vorliegenden Erfindung geschaffen werden können.

### Bezugszeichenliste

- 10: Waage
- 20: Anzeige- und Eingabeeinheit
- 30: Waagenplattform
- 40: Stativ
- 41: Stativhohlraum
- 42: Stativöffnung
- 43: Erstes Ende des Stativs
- 44: Zweites Ende des Stativs
- 45: Vertikale Wände
- 46: Öffnungen
- 50: Füsse
- 60: Waagenelektronik
- 61: Elektrische Leitungen im Waageninnere
- 62: Verbindungselemente
- 64: Elektrische Leitungen zur Stromzufuhr
- 65: Messleitung
- 70: Trägerelement
- 71: Positionierungselement
- 80: Verschlussplatte
- 81: Befestigungsmittel
- 90: Kabeldurchführung

## Patentansprüche

1. Waage (10) mit einer Anzeige- und Bedieneinheit (20), einer Waagenplattform (30), einer Waagenelektronik (60) zur Steuerung der Waage (10) und einem Stativ (40), das die Anzeige- und Bedieneinheit (20) mit der Waagenplattform (30) verbindet, wobei das Stativ (40) einen Stativhohlraum (41) aufweist, **dadurch gekennzeichnet, dass** das Stativ (40) eine Stativöffnung (42) aufweist und am oder im Stativhohlraum (41) ein Trägerelement (70) angeordnet ist und auf dem Trägerelement (70) zumindest Teile der Waagenelektronik (60) angeordnet sind und die auf dem Trägerelement (70) angeordneten Teile der Waagenelektronik (60) zu Wartungszwecken zumindest teilweise aus der Stativöffnung (42) entfernbar sind und das Trägerelement (70) verschiebbar im Stativhohlraum (41) einbringbar ist und die Aussenabmessungen des Trägerelements (70) näherungsweise den Innenabmessungen des Stativhohlraums (41) entsprechen.

2. Waage (10) nach Anspruch 1, **dadurch gekennzeichnet, dass** das Stativ (40) länglich ausgebildet ist und mehrheitlich vertikal ausgerichtet ist und ein erstes Ende (43) und ein zweites Ende (44) aufweist, wobei am ersten Ende (43) die Anzeigen- und Bedieneinheit (20) angeordnet und am zweiten Ende (44) die Waagenplattform (30) angeordnet ist.

3. Waage (10) nach einem der vorangehenden Ansprüche, **dadurch gekennzeichnet, dass** sich die Stativöffnung (42) am zweiten Ende (44) des Stativs (40) befindet und die Stativöffnung (42) orthogonal zur Längsausrichtung des Stativs (40) ausgerichtet ist.

4. Waage (10) nach einem der vorangehenden Ansprüche, **dadurch gekennzeichnet, dass** die Stativöffnung (42) verschliessbar ist.

5. Waage (10) nach Anspruch 4, **dadurch gekennzeichnet, dass** die Stativöffnung (42) mittels einer Verschlussplatte (80) verschliessbar ist und die Verschlussplatte (80) dem Trägerelement (70) entspricht.

6. Waage (10) nach einem der vorangehenden Ansprüche, **dadurch gekennzeichnet, dass** die auf dem Trägerelement (70) angeordneten Teile der Waagenelektronik nicht sensibel hinsichtlich Verschmutzung sind.

7. Waage (10) nach einem der vorangehenden Ansprüche, **dadurch gekennzeichnet, dass** die in der Waagenplattform (30) oder der Anzeige- und Bedieneinheit (20) verschmutzungssensible Teile der Waagenelektronik angeordnet sind.

8. Waage (10) nach einem der vorangehenden Ansprüche, **dadurch gekennzeichnet, dass** das Trägerelement (70) mehrheitlich flach ist.

9. Waage (10) nach einem der vorangehenden Ansprüche, **dadurch gekennzeichnet, dass** auf zwei gegenüberliegenden Seiten des Trägerelements (70) Positionierungselemente (71) angeordnet sind.

10. Waage (10) nach einem der vorangehenden Ansprüche **dadurch gekennzeichnet, dass** der Stativhohlraum (41) Führungsschienen zur Führung des Trägerelements (70) aufweist.

11. Waage (10) nach einem der vorangehenden Ansprüche, **dadurch gekennzeichnet, dass** die Waage eine externe Stromzufuhr mit Hilfe von elektrischen Leitungen (64) benötigt und diese elektrischen Leitungen (64) mit den auf dem Trägerelement (70) angeordneten Teilen der Waagenelektronik verbunden sind.

12. Waage (10) nach Anspruch 11, **dadurch gekennzeichnet, dass** auf dem Trägerelement (70) Verbindungselemente (62) angeordnet sind, die der Verbindung der elektrischen Leitungen zur Stromzufuhr (64) und/oder der Messleitungen (65) an die waageninternen Stromleitungen (61) dienen.

## Claims

1. Weighing scale (10) comprising a display- and operating unit (20), a scale platform (30), an electronic system (60) for the control of the scale (10), and a pedestal (40) connecting the display/operating unit (20) to the scale platform (30), wherein the pedestal (40) comprises a pedestal chamber (41), **characterized in that** the pedestal (40) has a pedestal opening (42), that a carrier element (70) is arranged in or at the pedestal chamber (41) and at least parts of the electronic system (60) are arranged on the carrier element (70), and that the parts of the electronic system (60) which are arranged on the carrier element (70) can be at least partially taken out of the pedestal opening (42) for servicing and the carrier element (70) can be slidably seated in the pedestal chamber (41)and the outer dimensions of the carrier element (70) approximately match the internal dimensions of the pedestal chamber (41).

2. Weighing scale (10) according to claim 1, **characterized in that** the pedestal (40) is of an elongated shape and has a first end (43) and a second end (44), wherein the display- and operating unit (20) is arranged at the first end (43) and the scale platform (30) at the second end (44).

3. Weighing scale (10) according to one of the preceding claims, **characterized in that** the pedestal opening (42) is located at the second end (44) of the pedestal (40) and the pedestal opening (42) is oriented orthogonal to the lengthwise direction of the pedestal (40).

4. Weighing scale (10) according to one of the preceding claims, **characterized in that** the pedestal opening (42) can be closed up.

5. Weighing scale (10) according to claim 4, **characterized in that** the pedestal opening (42) can be closed up by means of a closure plate (80), and that the closure plate (80) performs the function of the carrier element (70).

6. Weighing scale (10) according to one of the preceding claims, **characterized in that** the parts of the electronic system that are arranged on the carrier element (70) are not sensitive to dirt.

7. Weighing scale (10) according to one of the preceding claims, **characterized in that** parts of the electronic system that are sensitive to dirt are arranged in the scale platform (30) or in the display- and operating unit (20).

8. Weighing scale (10) according to one of the preceding claims, **characterized in that** the carrier element (70) is of a predominantly flat configuration.

9. Weighing scale (10) according to one of the preceding claims, **characterized in that** positioning elements (71) are arranged on two opposite sides of the carrier element (70).

10. Weighing scale (10) according to one of the preceding claims, **characterized in that** the pedestal chamber (41) comprises guide tracks to guide the seating of the carrier element (70).

11. Weighing scale (10) according to one of the preceding claims, **characterized in that** the scale requires an external supply of electricity by means of electrical conductors (64), and that said electrical conductors (64) are connected to the parts of the electronic system that are arranged on the carrier element (70).

12. Weighing scale (10) according to claim 13, **characterized in that** connector elements (62) are arranged on the carrier element (70), said connector elements (62) serving to connect the electrical power supply conductors (64) and/or the signal conductors (65) to the internal conductors (61) of the scale.

## Revendications

1. Balance (10) avec une unité de commande et d'affichage (20), une plateforme de balance (30), une électronique de balance (60) pour la commande de la balance (10), et un pied (40) reliant l'unité de commande et d'affichage (20) à la plateforme de balance (30), dans laquelle le pied (40) comporte un espace creux de pied (41), **caractérisée en ce que** le pied (40) comporte une ouverture de pied (42), et **en ce qu'**un élément de support (70) est prévu sur ou dans l'espace creux de pied (41), et **en ce qu'**au moins certaines parties de l'électronique de balance (60) sont disposées sur l'élément de support (70), et **en ce que** les parties de l'électronique de balance (60) qui sont disposées sur l'élément de support (70) peuvent être retirées au moins partiellement par l'ouverture de pied (42) aux fins de la maintenance, et **en ce que** l'élément de support (70) peut être inséré de façon déplaçable dans l'espace creux de pied (41), et **en ce que** les dimensions extérieures de l'élément de support (70) correspondent approximativement aux dimensions intérieures de l'espace creux de pied (41).

2. Balance (10) selon la revendication 1, **caractérisée en ce que** le pied (40) est conçu oblong et orienté essentiellement verticalement, et comporte une première extrémité (43) ainsi qu'une deuxième extrémité (44), l'unité de commande et d'affichage (20) étant installée à la première extrémité (43) et la plateforme de balance (30) étant installée à la deuxième extrémité (44).

3. Balance (10) selon l'une des revendications précédentes, **caractérisée en ce que** l'ouverture de pied (42) se trouve à la deuxième extrémité (44) du pied (40), et l'ouverture de pied (42) est orientée orthogonalement au sens longitudinal du pied (40).

4. Balance (10) selon l'une des revendications précédentes, **caractérisée en ce que** l'ouverture de pied (42) peut être fermée.

5. Balance (10) selon la revendication 4, **caractérisée en ce que** l'ouverture de pied (42) peut être fermée au moyen d'une plaque de fermeture (80), et la plaque de fermeture (80) correspond à l'élément de support (70).

6. Balance (10) selon l'une des revendications précédentes, **caractérisée en ce que** les parties de l'électronique de balance qui sont disposées sur l'élément de support (70) ne sont pas sensibles à la salissure.

7. Balance (10) selon l'une des revendications précédentes, **caractérisée en ce que** les parties sensibles à la salissure sont installées dans la plateforme de balance (30) ou dans l'unité de commande et d'affichage (20).

8. Balance (10) selon l'une des revendications précédentes, **caractérisée en ce que** l'élément de support (70) est essentiellement plat.

9. Balance (10) selon l'une des revendications précédentes, **caractérisée en ce que** des éléments de positionnement (71) sont disposés sur deux côtés opposés de l'élément de support (70).

10. Balance (10) selon l'une des revendications précédentes, **caractérisée en ce que** l'espace creux de pied (41) comporte des rails de guidage, pour guider l'élément de support (70).

11. Balance (10) selon l'une des revendications précédentes, **caractérisée en ce que** la balance nécessite une alimentation électrique externe, à l'aide de câbles électriques (64), ces câbles électriques (64) étant reliés aux parties de l'électronique de balance qui sont installées sur l'élément de support (70).

12. Balance (10) selon la revendication 11, **caractérisée en ce que** des éléments de raccordement (62) sont prévus sur l'élément de support (70), pour le raccordement des câbles électriques de l'alimentation électrique (64) et/ou des câbles de mesure (65) avec les câbles électriques (61) à l'intérieur de la balance.
